(19) Europäisches Patentamt
European Patent Office
Office européen des brevets

(11) Veröffentlichungsnummer: **0 200 683**
**B1**

# (12) EUROPÄISCHE PATENTSCHRIFT

(45) Veröffentlichungstag der Patentschrift: **04.04.90**

(51) Int. Cl.$^5$: **C 07 F 9/547,** C 08 K 5/52

(21) Anmeldenummer: **86810184.1**

(22) Anmeldetag: **23.04.86**

(54) **2-[1-Hydroxy-2,2,6,6-tetraalkyl-piperidin-4-yloxy]-dibenzodioxaphosphepine und -dibenzodioxaphosphocine.**

(30) Priorität: **29.04.85 US 728363**

(43) Veröffentlichungstag der Anmeldung:
**05.11.86 Patentblatt 86/45**

(45) Bekanntmachung des Hinweises auf die Patenterteilung:
**04.04.90 Patentblatt 90/14**

(56) Benannte Vertragsstaaten:
**DE FR GB IT NL**

(58) Entgegenhaltungen:
**EP-A-0 149 259**
**EP-A-2 335 520**

(73) Patentinhaber: **CIBA-GEIGY AG**
**Klybeckstrasse 141**
**CH-4002 Basel (CH)**

(72) Erfinder: **Ravichandran, Ramanathan**
**111 De Haven Drive, Apt. 125**
**Yonkers, N.Y. 10703 (US)**
Erfinder: **Spivack, John D.**
**1 Blue Jay Street**
**Spring Valley New York 10977 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 200 683 B1

**Beschreibung**

Die Erfindung betrifft neue Dibenzodioxaphosphepin- und -phosphocinderivative mit einem sterisch gehinderten Piperidinrest, der am Stickstoff durch OH substituiert ist. Die Erfindung betrifft weiterhin die Verwendung dieser Verbindungen als Stabilisatoren gegen den thermo-oxydation und photochemischen Abbau von organischen Materialien, insbesondere von polymeren Materialien.

Viele organische Materialien, wie z.B. Kunstoffe, Kunstharze, Schmieröle oder Mineralöle werden bekanntlich durch Hitze, Sauerstoff und Licht abgebaut. Eine Vielzahl von Stabilisatoren für die einzelnen Substrate sind bekannt. Ihre Wirksamkeit hängt von der Art des schädigenden Einflusses und von der Art des Substrates ab. So sind z.B. viele Antioxidantien bei Umgebungstemperaturen lange Zeit hervorragend wirksam, versagen jedoch bei höheren Temperaturen, wie sie z.B. bei der Verarbeitung von Kunstoffen auftreten. In solchen Fällen verwendet man oft zusätzlich zum Antioxidans einen sogenannten Verarbeitungsstabilisator, der bei höheren Temperaturen kurze Zeit wirksam ist, jedoch meist keine Langzeitwirkung besitzt. Als Verarbeitungsstabilisatoren verwendent man vielfach aromatische Phosphorigsäureester (Triarylphosphate), denen gewisse Nachteile anhängen. Manche dieser Verarbeitungsstabilisatoren sind ungenügend verträglich mit gewissen Stabilisatoren und wandern aus dem Substrat aus. Andere sind zu flüchtig oder thermisch oder hydrolytisch ungenügend beständig.

Die vorliegende Erfindung betrifft cyclische Phosphite, welche im Vergleich zu den bekannten Phosphiten eine besondere Kombination wertvoller Eigenschaften besitzen, die von einem Stabilisator verlangt werden.

Aehnliche cyclische Phosphite sind aus verschiedenen Publikationen bekannt. So beschreibt die US—PS 4,196,117 cyclische Biphenylphosphite, in denen der Phosphor über O oder S gebundene Kohlenwasserstoffreste trägt. Cyclische Phosphite von o,o'-Dihydroxydiphenyl als Stabilisatoren sind in Chem. Abstr. *68*, 12597 s (1968); *73*, 15657 a (1970) und *75*, 13024 q (1971) beschrieben.

In den US—A—4,318,845 und 4,374,219 sind Alkanolaminphosphite beschrieben, welche Stabilisatoren von hoher Hydrolysestabilität sind. In der US—A—4,259,492 wurden auch bereits Dioxaphosphepine mit einem sterisch gehinderten Piperdinrest beschrieben. Dieser Rest ist über Stickstoff an den Phosphor gebunden, die Verbindungen sind also keine cyclischen Phosphite sondern cyclische Phosphoamidite..

In der EP—A—0149259 (Stand der Technik nach Artikel 54(3) EPÜ) sind u.a. strukturell ähnliche 2-(1-Oxyl-2,2,6,6-letraalkyl-piperidin-4-yloxy) dibenzodioxaphosphepine und-dibenzodioxaphosphocine beschrieben.

Die erfindungsgemässen Vebindungen sind cyclische Phosphite, welche eine sterisch gehinderten Piperidinrest enthalten, dessen Stickstoffatom eine Hydroxylgruppe trägt. Sie zeichen sich gegenüber bekannten Phosphite durch eine besonders gute Wirksamkeit als Verarbeitungsstabilisatoren, Farbstabilisatoren und Lichtschutzmittel aus.

Die vorliegende Erfindung betrifft Phosphepin- und Phosphocin- derivate der Formel I

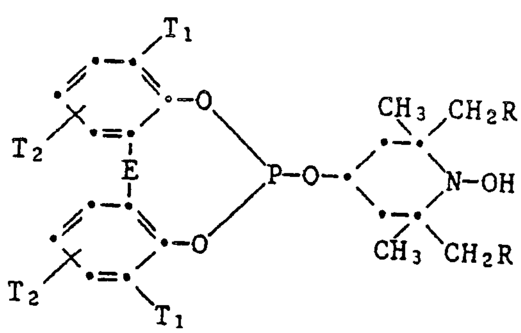

I

worin $T_1$ und $T_2$ unabhängig voneinander Wasserstoff, $C_1$—$C_{20}$-Alkyl, $C_5$—$C_6$-Cycloalkyl, $C_7$—$C_9$-Aralkyl, Phenyl oder durch 1—3 $C_1$—$C_8$-Alkyl-gruppen substituiertes Phenyl bedeuten,

E eine direkte Bindung, Methylen, $C_2$—$C_{12}$-Alkyliden oder —S— bedeutet und

R Wasserstoff oder Methyl ist.

Der Substituent $T_2$ steht vorzugweise in meta-Stellung zu $T_1$. $T_1$ und $T_2$ sind vorzugweise tertiäre Alkylgruppen mit 4—8 C-Atomen, insbesondere tert.-Butyl.

E ist vorzugweise eine direkte Bindung, Methylen oder $C_2$—$C_4$-Alkyliden, insbesondere eine direkte Bindung, Methylen oder Ethyliden.

Bevorzugt sind Verbindungen der Formel I, worin R Wasserstoff ist.

Die Substituenten $T_1$ und $T_2$ können unverzweigte oder versweigte Alkylgruppen mit 1—20 C-Atomen sein, wie z.B. Methyl, Ethyl, Isopropyl, n-Butyl, tert.-Butyl, tert-Amyl, n-Hexyl, 2-Ethylhexyl, n-Octyl, Decyl, Dodecyl, Octadecyl oder Eicosyl.

$T_1$ und $T_2$ als $C_5$—$C_6$-Cycloalkyl können z.B. Cyclopentyl oder Cyclohexyl sein.

$T_1$ und $T_2$ als Aralkyl können z.B. Benzyl, α-Methylbenzyl oder α,α-Dimethylbenzyl sein.

$T_1$ und $T_2$ als Alkylphenyl können z.B. Tolyl, Xylyl, Mesitylyl, Ethylphenyl, 4-Butylphenyl, 3,5-Dibutylphenyl, p-Octylphenyl, 3,5-Dioctylphenyl, insbesondere aber verzweigtes Alkylphenyl sein, wie. z.B. 2-tert.-Butylphenyl, 2,4-Di-tert.-butylphenyl, 2,4,6-Tri-tert.butyl-phenyl, 2-tert-Butyl-5-methylphenyl, 2,6-Di-tert.-butylphenyl, 2,6-Di-tert.-butyl-4-methylphenyl oder 2,4-Di-tert.-octylphenyl.

$T_1$ und $T_2$ als tertiäre $C_4$—$C_8$-Alkylgruppen können z.B. tert.-Butyl, tert.-Amyl oder tert.-Octyl (1,1,3,3-Tetramethylbutyl) sein. Bevorzugt sind $T_1$ und $T_2$ tert.-Butyl.

E als $C_2$—$C_{12}$-Alkyliden kann z.B. Ethyliden, 1,1-Propyliden, 1,1-Butyliden, 1,1-Amyliden, 1,1-Octyliden, 1,1-Decyliden oder 1,1-Dodecyliden sein. Bevorzugt ist E als Alkyliden Ethyliden, Propyliden oder Butyliden, insbesondere Ethyliden.

Wenn E eine direkte Bindung ist, so sind die Verbindungen der Formel I Derivate des Dibenzo[d,f][1,3,2]dioxaphosphepin.

Wenn E Methylen oder Alkyliden ist, so handelt es sich bein den Verbindungen der Formel I um 12H-Dibenzo[d,g][1,3,2]-dioxaphosphocin-derivate.

Die Bezifferung der Grundkörper ist dabei die folgende:

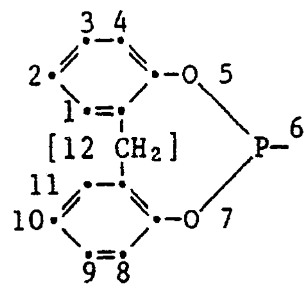

Die Verbindungen der Formel I können aus den entsprechenden 2,2'-Bisphenolen bzw. 2,2'-Alkylidenbisphenolen hergestellt werden. Die Bisphenole werden zunächst mit $PCl_3$ umgesetzt zu den cyclischen Phosphorochloriditen, die anschliessend mit einem 1,4-Dihydroxy-2,2,6,6-tetraalkylpiperidin umgesetzt werden. Die Umsetzung erfolgt in einem organischen Lösungsmittel, vorzugsweise in einem aromatischen Kohlenwasserstoff, wie z.B. in Benzol, Toluol oder Xylol, un in Gegenwart eines Protonenakzeptors, wie z.B. einem tertiären Amin, beispielweise Triethylamin oder Pyridin. Die Reaktion kann bei Raumtemperatur oder in der Wärme bis zur Rückflusstemperatur ausgeführt werden.

Die als Ausgangsmaterial benötigten Bisphenole sind handelsübliche Produckte oder können nach bekannten Methoden hergestellt werden. Die benötigten 1,4-Dihydroxypiperidine können nach der in J. Org. Chem. *36,* 209 (1971) beschriebenen Methode oder nach der in Helv. Chim. Acta *63,* 1407 (1980) beschriebenen Methode aus den entsprechenden 4-Hydroxypiperidin-1-oxylen hergestellt werden.

Die Verbindungen der Formel I sind wirkungsvolle Stabilisatoren für organische Materialien wie z.B. Schmieröle, Fette, Kosmetika, photographische Filme und Papiere, insbesondere aber für synthetische Polymere. Beispiele für Polymere, die mit diesen Verbindungen stabilisiert werden können, sind die folgenden:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Ethylen-Propylen-Dien-Terpolymeren; sowie Block-Copolymere des Styrols, wie z.B. Styrol-Butadiene-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS, MBS, ASA oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindung, wie z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetate.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acrylderivaten oder Acetalen ableiten, wie Polyvinylalkohol, Polyvinylacetat-, -stearat, -benzoat-, -maleat, Polyvinylbutyral, Polyallylphthalat, Polyallylmelamin.

11. Homo- und Copolymere von cyclischen Ethern, wie Polyalkylenglykole, Polyethylenoxid, Polypropylenoxyd oder deren Copolymere mit Bisglycidylethern.

12. Polyacetale, wie Polyoxymethylen, sowie solche Polyoxymethylene, die Comonomere wie z.B. Ethylenoxid enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, di sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthalamid, Poly-m-phenylen-isophthalamid, sowie deren Block-Copolymere mit Polyethern wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel albeiten, wie auch deren halogenhaltige, schwerbrennbare Modifikationen.

23. Vernetzbare Acrylharze, die sich von substituierten Acrylsäureestern ableiten wie z.B. von Epoxyacrylaten, Urethan-acrylaten oder Polyester-acrylaten.

24. Alkydharze, Polyesterharze und Arylatharze, die mit Melaminharzen, Harnstoffharzen, Polyisocyanaten, oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren wie z.B. PP/EPDM, Polyamid 6/EPDM oder ABS, PVC/EVA, PVC/ABS, PVC/MBS, PC/ABS, PBTP/ABS.

Von besonderer Bedeutung ist die Verwendung dieser Stabilisatoren in Polyolefinen und Copolyolefinen, wie in Polyethylen, Polypropylen, Polyisobutylen, Poly-1-buten, Poly-1-penten, Poly-3-methyl-1-buten, Poly-4-methyl-1-penten oder in Ethylen-Propylen-Copolymeren. Weitere Substrate von besonderer Bedeutung sind ABS-Terpolymere, schlagfestes Polystyrol, Polyphenylenoxid, Polybutadien, Polyisopren, Styrol-Butadien-Kautschuk, Naturkautschuk oder Schmieröle.

Die erfindungsgemässen Stabilisatoren werden den organischen Materialien in einer Mengen von 0,01 bis 5 Gew.-%, bezogen auf die gesamte Zusammensetzung, zugesetzt, wobei die Menge vom jeweiligen Substrat und Verwendungszweck abhängt. Vorzugsweise setzt man 0,1 bis 2,5 Gew.-% zu.

Der Zusatz zu Kunstoffen kann nach üblichen Methoden in jedem beliebigen Stadium vor der formgebenden Verarbeitung erfolgen. Beispielsweise kann der Stabilisator mit dem Polymer in Pulverform gemischt werden oder man mischt eine Suspension oder Lösung des Stabilisators mit einer Suspension oder Lösung des Polymeren.

Die Stabilisatoren der Formel I können in Kombination mit anderen Stabilisatoren verwendet werden, wie z.B. mit Antioxidantien, Metalldesaktivatoren, Lichtschutzmitteln oder Thiosynergisten.

Beispiele für solche Stabilisatoren sind die folgenden:

1. Antioxidantien

1.1. Alkylierte Monophenole

2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. Alkylierte Hydrochinone

2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. Hydroxylierte Thiodiphenylether

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole

2,2'-Methylen-bis-(6-tert.butyl-4-methylphenol)
2,2'-Methylen-bis-(6-tert.butyl-4-ethylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methylen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methoxy-benzyl)-6-tert.butyl-4-methyl-phenyl]-terephthalat.

1.5. Benzylverbindungen

1,3,5-Tri-(2,5-di-tert.butyl-4-hydroxybenzyl)-2,4,6-trimethylbenzol
Di-(3,5-di-tert.butyl-4-hydroxybenzyl)-sulfid
2,5-di-tert.butyl-4-hydroxybenzyl-mercaptossigsaure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-4-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

1.6. Acylaminophenole

4-Hydroxy-läurinsäureanilid
4-Hydroxy-stearisäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7 Ester der β-(3,5-Di-tert.butyl-4-hydroxyphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der β-(5-tert.butyl-4-hydroxy-3-methylphenyl)-propionsäure mit ein- oder mehrwertigen Alkoholen, wie. z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der β-(3,5-Di-tert.butyl-4-hydroxyphenyl)-propionsäure, wie z.B.
N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

2. UV-Absorber und Lichtschutzmittel

2.1. 2-(2'-Hydroxyphenyl)-benztriazole, wie z.B. das 5'-Methyl-, 3',5'-Di-tert.butyl-, 5'-Tert-butyl-, 5'-(1,1,3,3-Tetramethyl-butyl)-, 5-Chlor-3',5'-di-tert.butyl-, 5-Chlor-3'-tert.butyl-5'-methyl-, 3'-sec.Butyl-5'-tert.butyl-, 4'-Octoxy-, 3',5'-Di-tert.amyl-, 3',5'-Bis-(α,α-dimethylbenzyl)-Derivat.

2.2. 2-Hydroxybenzophenone, wie. z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-Tert.butyl-phenylsalicylat, Phenylsalicylat, Octylphenylsalicylat, Dibenzoylresorcin, Bis-(4-tert.butylbenzoyl)-resorcin, Benzolyresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan, β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin,

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethylpiperidyl)-sebacat Bis-(1,2,2,6,6-pentamethylpiperidyl)-sebacat n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N-(2,2,6,6-Tertramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2,'-ethyl-oxanilid, N,N'-Bis-(3-dimethylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von ortho-und para-Methoxy- sowie von o- und p-Ethoxy-di-substituierte Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5,5]udecan.

5. Peroxidzerstörende Verbindungen, wie z.B. Ester der β-Thio-dipropionsäure, beispielsweise der Lauryl-, Stearyl-, Myristyl- oder Tridecylester, Mercatobenzimidazol, das Zinksalz des 2-Mercaptobenzimidazols, Zink-dibutyl-dithiocarbamat, Diotadecyldisulfid, Pentaerythrit-tetrakis-(β-dodecylmercapto)-propionat.

Von besonderer Bedeutung ist die Mitverwendung von phenolischen Antioxidantien, wobei die verwendete Menge an Antioxidans 0,01 bis 5 Gew.-%, bezogen auf die gesamte Zusammensetzung, beträgt.

Bei der Verwendung in Kunststoffen können weitere für Kunststoffe gebräuchliche Zusätze mitverwendet werden, wie. z.B. Füllstoffe, Verstärkungsmittel, Pigmente, Farbstoffe, Weichmacher, Flammschutzmittel oder Antistatika.

Die folgenden Beispiele illustrieren die Herstellung und Verwendung von Verbindungen der Formel I näher. Die Temperaturen sind darin in °C angegeban. Teile bedeuten Gewichts-Teile.

Beispiel 1

2,4,8,10-Tetra-tert.butyl-6-(1-hydroxy-2,2,6,6,-tetramethylpiperidin-4-yloxy)-dibenzo[d,f][1,3,2]dioxaphosphepin

Unter Stickstoff-Atmosphäre und Ausschluss von Feuchtigkeit wird eine Lösung von 20,54 g, 3,3',5,5'-Tetra-tert.butyl-2,2'-dihydroxydiphenyl und 13,9 ml Triethylamin in 80 ml Toluol bei 5° unter Rühren mit 4,4 ml Phosphortrichlorid versetzt.

Die Reaktionsmischung wird weitere 12 h bei Raumtemperatur gerührt und dann vom ausgefallenen Aminsalz abfiltriert. Das Filtrat wird im Vakuum eingedampft, der Rückstand in 200 ml Tetrahydrofuran gelöst und diese Lösung mit einer Lösung von 17,01 g 1,4-Dihydroxy-2,2,6,6-tetramethylpiperidin und 14 ml Trimethylamin in 100 ml Tetrahydrofuran umgesetzt. Die Reaktionslösung wird 12 h bei Raumtemperatur gerührt, dann filtriert und das Filtrat in Vakuum eingedampft. Der Rückstand wird aus Acetonitril kristallisiert, die Kristalle werden abgesaugt, gewaschen und getrocknet. Man erhält 31,3 g eines hellrosa Pulvers, das bei 183—185° schmilzt.

| | | | | |
|---|---|---|---|---|
| Analyse: $C_{37}H_{55}NO_4P$ | ber. | C 72,63% | H 9,56% | N 2,29% |
| | gef. | C 72,9% | H 9,3% | N 2,0% |

Beispiel 2

2,4,8,10-Tetra-tert.butyl-6-(1-hydroxy-2,2,6,6-tetramethylpiperidin-4-yloxy)-dibenzo[d,g][1,3,2]dioxaphosphocin

Diese Verbindung wird analog zu Beispiel 1 hergestellt aus 42,5 g 2,2'-Methylen-bis(4,6-di-tert.butylphenyl), 8,8 ml $PCl_3$, 36,8 ml Triethylamin und 11,03 g 1,4-Dihydroxy-2,2,6,6-tetramethylpiperidin. Das Produkt ist eine weisses Pulver und schmilzt nach Kristallisation aus Toluol bei 145—147°.

| | | | |
|---|---|---|---|
| Analyse: $C_{38}H_{60}NO_4P$ | ber. | C 72,92% | H 9,66% |
| | gef. | C 72,9% | H 9,3% |

Beispiel 3

2,4,8,10-Tetra-tert.butyl-6-(1-hydroxy-2,2,6,6-tetramethylpiperidin-4-yloxy)-12-methyl-12H-dibenzo[d,g]-[1,3,2]dioxaphosphocin

Diese Verbindung wird analog Beispiel 1 hergestellt aus 21,94 g 2,2'-Ethyliden-bis(4,6-di-tert.butylphenol), 4,4 ml $PCl_3$, 19,3 ml $(C_2H_5)_3N$ und 6,68 g 2,4-Dihydroxy-2,2,6,6-tetramethylpiperidin. Das Produkt ist ein weisses Pulver das nach Umkristallisation aus Toluol bei 250—252° schmilzt.

| | | | | |
|---|---|---|---|---|
| Analyse: $C_{39}H_{62}NO_4P$ | ber. | C 73,20% | H 9,72% | N 2,19% |
| | gef. | C 73,0% | H 9,9% | N 2,3% |

Beispiel 4

Verarbeitungsstabilisierung von Polypropylen bei 260°C

100 Teile Polypropylen (Profax® 6501, Fa. Himont) und 0,1 Teil Calcium-stearat werden mit einer Methylenchlorid-Lösung der in Tabelle 1 angegebenen Stabilisatoren gemischt. Das Lösungsmittel wird im Vakuum verdampft und das Gemisch im Extruder homogenisiert. Die Zylindertemperaturen des Extruders betragen dabei 232°, 246° und 260°. Die Extrusion wird viermal unter denselben Bedingungen wiederholt. Nach der ersten, dritten und fünften Extrusion werden Proben zu 3,2 mm starken Blättchen verpresst (Presstemperatur 193°) und von den Proben der Yellowness Index (YI) gemäss ASTM-D 1925—63T bestimmt.

Ausserdem wird der Schmelzfluxindex (MFT) gemäss Medhode ASTM 1238/L des extrudierten

Materials bestimmt. Als Antioxydans A0—1 wird Pentaerythrityl-tetra[3,5-di-tert.buty-4-hydroxy-dihydrocinnamat] verwendet. Die Ergebnisse sidn in Tabelle 1 zusammengestellt.

Tabelle 1

| Stabilisatoren | MFI (g/10 min) nach 1 | 3 | 5 Extr. | YI nach 1 | 3 | 5 Extr. |
|---|---|---|---|---|---|---|
| Keiner | 7,3 | - | 12,7 | 0,8 | 0,3 | 0,2 |
| 0,1 % AO-1 | 3,9 | - | 5,1 | 3,2 | 5,2 | 6,7 |
| 0,1 % AO-1 + 0,05 % Produkt aus Beispiel 1 | 2,5 | - | 2,7 | 0,8 | 1,0 | 2,0 |
| 0,1 % AO-1 + 0,05 % Produkt aus Beispiel 2 | 2,3 | - | 2,8 | 1,9 | 3,3 | 2,9 |

Beispiel 5

Litchstabilisierung von Polyphenylenoxid

Verwendt wird ein Polyblend aus Poly[2,6-dimethyl-1,4-phenylenoxid] und einem hochschlagfesten Styrolpolymeren (Noryl® N 190, General Electric Corp.), dem die Stabilisatoren als Methylenchlorid-Lösung zugemischt werden. Das Lösungsmittel wird 2 h bei 110°C im Vakuum verdampft und die Polymermischung durch Extrudieren homogenisiert. Die Extrudertemperaturen in den Zylindern betragen dabei 232° und 235°, in der Heizzone 238°. Das Extrudat wird zu 3,2 mmn dicken Platten verpresst, die in einem Fadeometer-Gerät mit einer Xenon-Bogenlampe bei 63 ± 3° und einer relativen Feuchte von 25—35% unter einer 3,2 mm dicken Glasscheibe belichtet werden. Von den Proben wird der Yellowness-Index (YI) gemäss Methode ASTM D 1925—63T bestimmt. Die Werte sind in Tabelle 2 zusammengestellt.

Tabelle 2

| Stabilisatoren | YI nach einer Belichtungszeit von 60 | 129 | 205 | 307 | 405 h |
|---|---|---|---|---|---|
| Keiner | 1,3 | 1,9 | 5,4 | 15,0 | 23,3 |
| 0,1 % UVA *) + 0,5 % Produkt von Beispiel 2 | 3,2 | 3,2 | 2,1 | 4,9 | 10,3 |
| 0,1 % UVA *) + 0,5 % Produkt von Beispiel 3 | 3,5 | 3,3 | 2,5 | 4,7 | 9,3 |

*) UVA = 2-(2-Hydroxy-3,5-di-tert.butylphenyl)-2H-benztriazol

Beispiel 6

Wenn ion analoger Weise ein ABS-Polymer, ein hochschlagfestes Polystyrol, Polybutadien, Polyethylen, SB-Kautschuk, Polyisopren, Naturkautschuk, ein Schmieröl auf Mineralölbasis oder auf synthetischer Basis mit einem der Produkte aus den Beispielen 1, 2 oder 3 versetzt wird, so resultiert eine erhöhte Stabilität des Substrates, verglichen mit den jeweiligen unstabilisierten Substraten.

**Patentansprüche**

1. Verbindung der Formel I

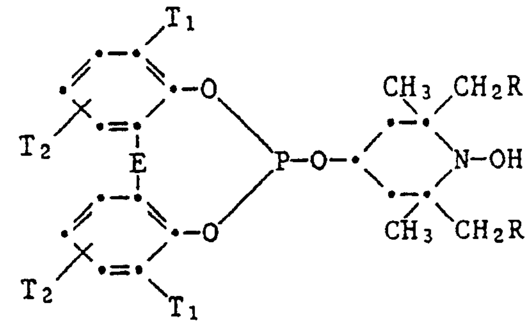

I

worin
$T_1$ und $T_2$ unabhängig voneinader H, $C_1$—$C_{20}$-Alkyl, $C_5$—$C_6$-Cycloalkyl, $C_7$—$C_9$-Aralkyl, Phenyl oder durch 1—3 $C_1$—$C_8$-Alkylgruppen substituiertes Phenyl bedeuten,
E eine direkte Bindung, Methylen, $C_2$—$C_{12}$-Alkyliden oder —S— bedeutet und
R Wasserstoff oder Methyl ist.

2. Verbindung gemäss Anspruch 1 der Formel I, worin $T_2$ in meta-Stellung zu $T_1$ steht.

3. Verbindung gemäss Anspruch 1 der Formel I, worin $T_1$ und $T_2$ tertiäre Alkylgruppen mit 4—8 C-Atomen sind.

4. Verbindung gemäss Anspruch 3, worin $T_1$ und $T_2$ tertiäre Butylgruppen sind.

5. Verbindung gemäss Anspruch 1, worin E eine direkte Bindung, Metylen oder $C_2$—$C_4$-Alkyliden ist.

6. Verbindung gemäss Anspruch 5, worin E eine direkte Bindung, Methylen oder Ethyliden ist.

7. Verbindung gemäss Anspruch 1, der Formel I, worin R Wasserstoff ist.

8. Die Verbindung 2,4,8,10-Tetra-tert.butyl-6-(1-hydroxy-2,2,6,6-tetramethylpiperidin-4-yloxy)-dibenzo-[d,f][1,3,2]dioxaphosphepin gemäss Anspruch 1.

9. Die Verbindung 2,4,8,10-Tetra-tert.butyl-6-(1-hydroxy-2,2,6,6-tetramethylpiperidin-4-yloxy)-dibenzo-[d,g][1,3,2]dioxaphosphocin gemäss Anspruch 1.

10. Gegen Oxydation, thermischen und photochemischen Abbau stabilisiertes organisches Material, enthaltend 0,01 bis 5 Gew.-%, bezogen auf die gesamte Zusammensetzung, einer Verbindung des Anspruches 1.

11. Zusammensetzung gemäss Anspruch 10, worin das organische Material ein synthetisches Polymer ist.

12. Zusammensetzung gemäss Anspruch 11, worin das Polymer ein Polyolefin oder Copolyolefin ist.

13. Zusammensetzung gemäss Anspruch 10, worin das organische Material ein Acylnitril-Butadien-Styrol-Terpolymer, ein schlagfestes Polystyrol, Polyphenyloxid, Polybutadien, Polyisopren, ein Styrol-Butadien-Kautschuk, Naturkautschuk oder ein Schmieröl ist.

14. Zusammensetzung gemäss Anspruch 13, worin das organische Material ein Polyphenylenoxid oder dessen Mischung mit einem Styrol-Polymeren ist.

15. Zusammensetzung gemäss Anspruch 10, enthaltend zusätzlich 0,01 bis 5 Gew.-%, bezogen auf die gesamte Zusammensetzung, eines phenolischen Antioxidans.

16. Verwendung einer Verbindung der Formel I des Anspruches 1 zum Stabilisieren von organischem Material gegen oxidativen, thermischen und photochemischen Abbau.

**Revendications**

1. Composé répondant à la formule I:

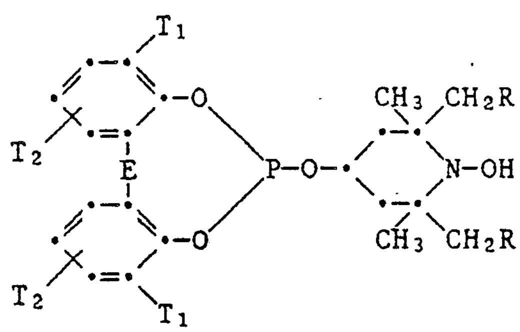

I

dans laquelle:

$T_1$ et $T_2$ représentent chacun, indépendamment l'un de l'autre, l'hydrogène, un alkyle en $C_1$—$C_{20}$, un cycloalkyle en $C_5$—$C_6$, un aralkyle en $C_7$—$C_9$, un phényle ou un phényle porteur de 1 à 3 alkyles en $C_1$—$C_8$,

E représente une liaison directe, un méthylène, un alkylidène en $C_2$—$C_{12}$ ou —S— et

R représente l'hydrogène ou un méthyle.

2. Composé selon la revendication 1 qui répond à la formule I dans laquelle $T_2$ est en position méta par rapport à $T_1$.

3. Composé selon la revendication 1 qui répond à la formule I dans laquelle $T_1$ et $T_2$ sont chacun un radical alkyle tetiaire contenant de 4 à 8 atomes de carbone.

4. Composé selon la revendication 3 dans lequel $T_1$ et $T_2$ sont chacun un radical tert-butyle.

5. Composé selon la revendication 1 dans lequel E représente une liasion directe, un radical méthylène ou un radical alkylidène en $C_2$—$C_4$.

6. Composé selon la revendication 5 dans lequel E représente un liaison directe ou un radical méthylène ou éthylidène.

7. Composé selon la revendication 1 qui répond à la formule I dans laquelle R représente l'hydrogène.

8. Composé selon la revendication 1, en l'espèce la tétra-ter-butyl-2,4,8,10 (hydroxy-1 tétraméthyl-2,2,6,6 pipéridyl-4 oxy)-6 dibenzo[d,f][1,3,2]dioxaphosphépine.

9. Composé selon la revendication 1, en l'espèce la tétra-ter-butyl-2,4,8,10 (hydroxy-1 tétraméthyl-2,2,6,6 pipéridyl-4 oxy)-6 dibenzo[d,g][1,3,2]dioxaphosphocine.

10. Matière organique qui a été stabilisée contre l'oxydation et contre la dégradation thermique et photochimique, matère qui contient de 0,01 à 5% en poids, par rapport à l'ensemble de la composition, d'un composé selon la revendication 1.

11. Composition selon la revendication 10 dans laquelle la matière organique est un polymère synthétique.

12. Composition selon la revendication 11 dans laquelle le polymère est un polyoléfine ou une copolyoléfine.

13. Composition selon la revendication 10 dans laquelle la matière organique est un terpolymère acrylonitrile/butadiène/styrène, un polystyrène de haute résilience, un poly-(oxy-phénylène), un polybutadiène, un polyisoprène, un caoutchouc styrène/butadiène, un caoutchouc naturel ou une huile lubrifiante.

14. Composition selon la revendication 13 dans laquelle la matière organique est un poly-(oxyphénylène) ou un mélange d'un tel polymère avec un polymère du styrène.

15. Composition selon la revendication 10 qui contient, en plus, de 0,01 à 5% en poids, par rapport à l'ensemble de la composition, d'un anti-oxydant phénolique.

16. Application d'un composé de formule I selon la revendicationa 1 à la stabilisation d'une matière organique contre le dégradation oxydative, thermique et photochimique.

**Claims**

1. A compound of the formula I

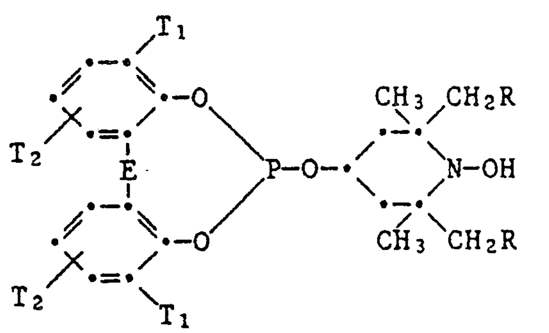

I

wherein

$T_1$ and $T_2$ are independently of one another H, $C_1$—$C_{20}$alkyl, $C_5$—$C_6$cycloalkyl, $C_7$—$C_9$aralkyl, phenyl or phenyl substituted by 1 to 3 $C_1$—$C_8$alkyl groups,

E is a direct bond, methylene, $C_2$—$C_{12}$alkylidene or —S— and

R is hydrogen or methyl.

2. A compound according to claim 1 of the formula I, wherein $T_2$ is in the meta position with respect to $T_1$.

3. A compound according to claim 1 of the formula I, wherein $T_1$ and $T_2$ are tertiary alkyl groups of 4 to 8 carbon atoms.

4. A compound according to claim 3, wherein $T_1$ and $T_2$ are tertiary butyl groups.

5. A compound according to claim 1, wherein E is a direct bond, methylene or $C_2$—$C_8$alkylidene.

6. A compound according to claim 5, wherein E is a direct bond, methylene or ethylidene.

7. A compound according to claim 1 of the formula I, wherein R is hydrogen.

8. The compound 2,4,8,10-tetra-tert-butyl-6-(1-hydroxy-2,2,6,6-tetramethylpiperidin-4-yloxy)-dibenzo-[d,f][1,3,2]dioxaphosphepine according to claim 1.

9. The compound 2,4,8,10-tetra-tert-butyl-6-(1-hydroxy-2,2,6,6-tetramethylpiperidin-4-yloxy)-dibenzo-[d,g][1,3,2]dioxaphosphocine according to claim 1.

10. An organic material stabilized against oxidation, thermal degradation and photochemical degradation containing 0.01 to 5% by weight, based on the total composition, of a compound of claim 1.

11. A composition according to claim 10, wherein the organic material is a synthetic polymer.

12. A composition according to claim 11, wherein the polymer is a polyolefin or copolyolefin.

13. A composition according to claim 10, wherein the organic material is an acrylonitrile-butadienestyrene terpolymer, an impact polystyrene, poly(phenylene oxide), polybutadiene, polyisoprene, a styrenebutadiene rubber, natural rubber or a lubricating oil.

14. A composition according to claim 13, wherein the organic material is a poly(phenylene oxide) or a mixture thereof with a styrene polymer.

15. A composition according to claim 10 additionally containing 0.01 to 5% by weight, based on the total composition, of a phenolic antioxidant.

16. Use of a compound of the formula I of claim 1 for stabilizing an organic material against oxidative, thermal and photochemical degradation.